Europäisches Patentamt

European Patent Office

Office européen des brevets

(11) Publication number: **0 258 194**
**A1**

(12) **EUROPEAN PATENT APPLICATION**

(21) Application number: **87850229.3**

(22) Date of filing: **13.07.87**

(51) Int. Cl.⁴: **B 60 N 1/12**

(30) Priority: **06.08.86 SE 8603333**

(43) Date of publication of application:
**02.03.88 Bulletin 88/09**

(84) Designated Contracting States: **DE FR GB IT**

(71) Applicant: **AB VOLVO**
**Torslanda**
**S-405 08 Göteborg (SE)**

(72) Inventor: **Karlbrink, Leif**
**Adolf Edelsvärds Gata 12**
**S-41451 Göteborg (SE)**

(74) Representative: **Hellbom, Lars Olof et al**
**H. Albihns Patentbyra AB Box 7664**
**S-103 94 Stockholm (SE)**

(54) Vehicle seat with a folding arm-rest serving as a child's seat.

(57) The invention to a vehicle seat with an arm-rest (3) which can be folded forwardly from a cavity (4) in the seat-back (2). The arm-rest is divided into a lower part (6) and an upper part (7) which can be folded-up to close off the cavity. The lower part (6) forms in this manner a child's seat cushion and the upper part forms the associated seat-back.

FIG.2c

EP 0 258 194 A1

## Description

### Vehicle seat with a folding arm-rest serving as a child's seat

The present invention relates to a vehicle seat, comprising a seat-bottom and a seat-back with a portion which can be folded out of a cavity, and when folded out forms an arm-rest between two seats and when folded up closes the cavity with its underside lying essentially co-planar with the seat-back

The purpose of the present invention is, starting from a vehicle seat with a folding arm-rest, to eliminate the need for a loose cushion or pillow which is used today for young children (younger than 10 years) to provide elevated seating, so that the regular vehicle belt system can be used for children as well.

A loose child's seat must be removed and put somewhere when not used, which often results in it being removed from the vehicle and not being available when needed, for example when the vehicle is only occasionally used for transporting children.

For the purpose of eliminating the need for a loose child's seat, there has been previously suggested a design in which the back of the front seat-back is provided with a flap which can be folded down to form a seat. The seat-back is also adjustable to provide the correct forward incline and together with the flap form a complete rearwardly directed child's seat.

The child's seat in which the child faces backwards has, however, primarily been used for very small children, since it is generally desirable, especially to avoid car sickness, to sit facing forward.

Consequently, for the age group between about 6 years and 10-12 years there has been no suitable alternative to a loose seat or cushion in order to use the existing belt system for children.

In a vehicle seat of the type described by way of introduction there is therefore suggested according to the invention that the seat-back is characterized in that the seat-back has a movable part adapted to the shape of the cavity, said part being disposed in the folded-out position of the arm-rest to close the cavity and form a seat-back to permit the arm-rest to be used as a child's seat cushion.

Through this simple design step, a complete child's seat is created from an existing installation. The seat is always available when needed but when folded up is out of the way so that the space can be used by an adult.

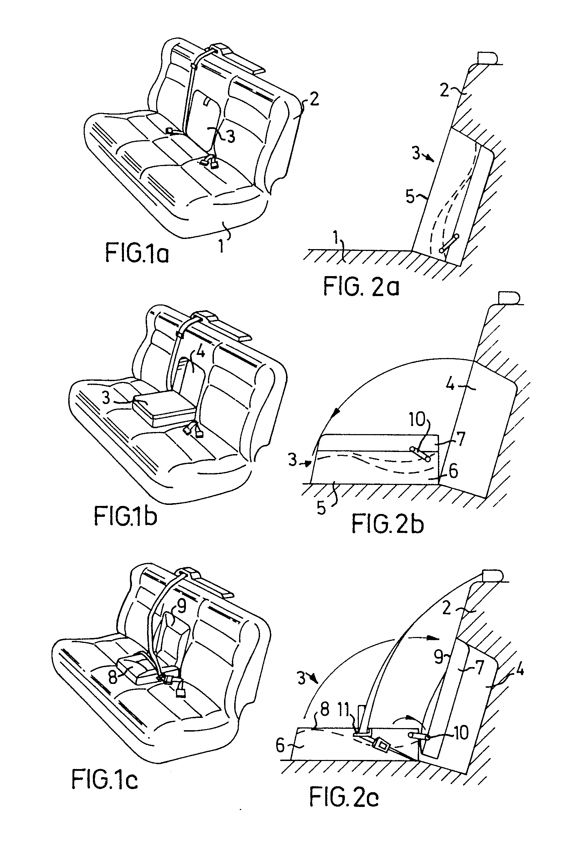

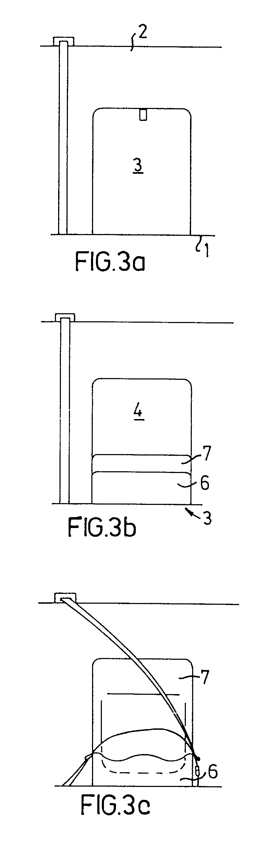

The invention will be described in more detail with reference to an example shown in the accompanying drawings, where Figures 1a-1c show a perspective view of a vehicle seat with a child's seat according to the invention, Figures 2a-2c a longitudinal section through the seat in Fig. 1 and Figures 3a-3c the seat in Figs. 1 and 2 as viewed from the front.

The seat shown is a conventional vehicle back-seat with a seat-bottom 1, a seat back 2 and an arm-rest generally designated 3, which in a known manner is pivotable between a folded-up position in which it fills a cavity 4 in the seat-back 2 and a folded-down position in which it divides the seat into two sections. When folded up, the bottom 5 of the arm-rest 3 lies co-planar with the seat-back 2.

According to the invention, the arm-rest 3 consists of two parts, an upholstered lower part 6 and an upholstered upper part 7. The upper surface 8 of the lower part 6 is cut like an ordinary seat-bottom, and the lower surface 9 of the upper part is cupped in the same manner as an ordinary seat-back. In the example shown, the upper part 7 is swingably mounted on the lower part 6 by means of a pair of linked arms 10, making the upper part 7 pivotable and slightly displaceable relative to the upper part 6.

In Figs. 1a-3a the arm-rest 3 is shown in the folded-up position filling the cavity 4 for maximum use of the space in the back-seat. In Figs. 1b-3b, the arm-rest 3 is folded down with the upper part 7 resting on the lower part 6. Figs. 1c-3c show the lower part 6 resting against the seat-bottom 1, while the upper part 7 is folded-up against the cavity 4. The shape of the upper part 7 conforms to the shape of the cavity so that the upper part closes the cavity 4 and provides with its underside an even transition to the seat-back 2.

In Figs. 1c-3c, an ordinary seat-belt is fastened over the arm-rest 3 serving as a child's seat. In the example shown, the lower part 6 is provided with guides 11, known per se, for the seat-belt, fixing the belt and preventing it from sliding up on the child's hips in a collision.

As can be seen from Figs. 2a-2c, the example shown requires that the upper part 7, when it is folded up into the position shown in Fig. 2c, can be lowered somewhat behind the lower part 6. An an alternative to the link arms 10, guides running in grooves can be used to achieve the required combined pivoting and displacement movement.

### Claims

1. Vehicle seat, comprising a seat bottom and a seat-back with a portion which can be folded out of a cavity, and when folded out forms an arm-rest between two seats and when folded up closes the cavity with its underside lying essentially co-planar with the seat-back, characterized in that the seat-back (2) has a movable part (7) adapted to the shape of the cavity (4), said part being disposed in the folded-out position of the arm-rest (3) to close the cavity and form a seat-back to permet the arm-rest to be used as a child's seat cushion.

2. Vehicle seat according to Claim 1, characterized in that the arm-rest (3) is divided in two parts and comprises, as viewed when folded out, a lower part (6) resting on the seat-bottom (1) and an upper part (7) movable relative to the lower part (6) and having one side forming the top surface of the arm-rest and an opposite (9) forming the front surface of the seat-back of the child's seat.

3. Vehicle seat according to Claim 2, characterized in that the upper part (7) is pivotable and limitedly displaceable relative to the lower part (6).

4. Vehicle seat according to Claim 2 or 3, characterized in that the upper part (7) is swingably mounted on the lower part (6) by means of link arms (10).

5. Vehicle seat according to one of Claims 1-4, characterized in that the arm-rest (3) is provided with guides (11) for a seat-belt.

0258194

FIG.1a

FIG. 2a

FIG.1b

FIG.2b

FIG.1c

FIG.2c

0258194

FIG.3a

FIG.3b

FIG.3c

**European Patent Office**

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| A | DE-B- 2 602 884 (J WONNEBEGER) — — — | | B60N 1/12 |
| Y | DE-A1- 2 917 798 (E R RAINSFORDS) — — — | | |
| Y | DE-C2- 3 018 019 (H ENGELHARDT) — — — | | |
| A | DE-C2- 3 215 488 (V VIT) — — — | | |
| A | EP-A1- 0 003 354 (G RUDA) — — — | | |
| Y | US-A- 4 540 216 (KD HASSEL) | | |

| | | | TECHNICAL FIELDS SEARCHED (Int. Cl.4) |
|---|---|---|---|
| | | | B60N |

The present search report has been drawn up for all claims

| Place of search STOCKHOLM | Date of completion of the search 1987-11-02 | Examiner CHRISTER JÖNSSON |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82